# EUROPEAN PATENT APPLICATION

(11) **EP 3 306 999 A1**
(43) Date of publication of application: **11.04.2018**
(21) Application number: 16802433.9
(22) Date of filing: 06.05.2016
(51) Int. Cl.: H04W 72/04

(54) **CHANNEL ACCESS METHOD, STATION AND SYSTEM**

(30) Priority: 05.06.2015 CN 201510308851
(71) Applicant: ZTE Corporation, Shenzhen, Guangdong 518057 (CN)
(72) Inventor: YANG, Dan, Shenzhen Guangdong 518057 (CN)
(74) Representative: Brevalex
(86) International application number: PCT/CN2016/081323
(87) International publication number: WO 2016/192510

(57) **Abstract**

A channel access method includes: a second station receives a first wireless frame transmitted by a first station in a first transmission time period, the first wireless frame carrying a signaling used for informing the second station that the first station releases the first transmission time period; the second station receives the first wireless frame transmitted by the first station, performs channel detection within a preset time interval, and transmits a second wireless frame on the subset of the channel set whose channel detection result is idle.

## Description

### TECHNICAL FIELD

The present disclosure relates to, but not limited to, the field of communications, and particularly to a channel access method, a Station (STA) and a system.

### BACKGROUND

At present, in the field of wireless networks, a Wireless Local Area Network (WLAN) is rapidly developed, and a global WLAN coverage requirement increasingly grows. The Institute of Electrical and Electronic Engineers 802.11 (IEEE802.11) workgroup sequentially defines a series of WLAN technical standards such as 802.11a, 802.11b, 802.11g and 802.11n, which mainly draft specifications of a Physical Layer (PHY) and a Media Access Control (MAC) layer. Then, there sequentially appear other task groups devoted to developing specifications related to technical improvements of 802.11. For example, the High Efficiency WLAN (HEW) task group mainly makes researches on how to enable a WLAN to implement more efficient data transmission in a dense networking scenario.

A basic architecture of a WLAN refers to a Basic Service Set (BSS) formed by STAs, and the BSS includes an Access Point (AP) STA and multiple non-AP STAs associated with the AP STA. 802.11 defines two basic wireless channel access manners: a contention-based access manner, i.e. a Distributed Coordination Function (DCF), and a scheduling-based access manner, i.e. a Point Coordination Function (PCF). On the basis of the two basic access manners, considering a Quality of Service (QoS) requirement of a service stream, two other channel access manners are disclosed: Enhanced Distributed Channel Access (contention channel access process) and Hybrid Coordination function Controlled channel Access (HCCA).

ADCF is a basic channel access mode, and enables multiple STAs to share a wireless channel by using a Carrier Sense Multiple Access (CSMA) with Collision Avoidance (CSMA/CA) mechanism. EDCA is an enhanced channel access mode. On the basis of the CSMA/CA mechanism, four Access Categories (ACs) are defined in EDCA, i.e. AC Background (AC_BK), AC Best Effort (AC_BE), AC Video (AC_VI) and AC Voice (AC_VO), a set of specific parameters are defined for each AC, and these parameters statistically specify priority levels of different ACs for channel access. An EDCA-based contention channel access process is that: after a channel is switched into an idle state, a Transmission Opportunity (TXOP) is obtained after waiting for a fixed duration, called as an Arbitration Inter-Frame Space (AIFS), and then waiting for a random backoff time period.

In EDCA and HCCA manners, an STA obtains a TXOP through a channel access process. The TXOP refers to a bounded time period where the STA may transmit a specific communication category. Once the TXOP is obtained, the STA may continue transmitting a data frame, or a control frame or a management frame or receiving an Acknowledgement (ACK) frame according to an AC. A precondition is that durations of these frame sequences do not exceed a TXOP upper limit set for the AC. At a starting point of the TXOP, Network Allocation Vectors (NAVs) of other auditing STAs may be set, and within this time, the auditing STAs will send no data. In addition, a related technology also allows the STA to use a Contention Free End (CF-End) frame to cut off the TXOP to end the TXOP earlier. When the current TXOP is ended, a channel will be open again for all the STAs to contend for access.

In a typical scenario of a HEW, STAs are distributed densely, which makes channel contention fierce, TXOPs which may be acquired by each STA are consequently reduced, and reduction of the TXOPs causes more buffered data to be transmitted probably existing on the STAs. For example, a typical service application of the HEW is a video service, and there is usually more downlink data than uplink data. For another example, in some scenarios, an AP is required to trigger uplink multiuser transmission or perform downlink multiuser transmission, so that the AP requires more TXOPs. Although the related technology may increase a channel access priority of the AP by configuring a high-priority channel access parameter to the AP, thereby theoretically increasing a TXOP acquisition opportunity of the AP. However, the AP is still required to contend for a channel, so that it is impossible to reduce contention overhead.

### SUMMARY

The below is a summary about a theme described in the disclosure in detail. The summary is not intended to limit the scope of protection of the claims.

Embodiments of the disclosure provide a channel access method, which may include the following actions.

A second STA receives a first radio frame sent within a first transmission time period from a first STA. Signaling carried in the first radio frame is arranged to notify the second STA that the first STA releases the first transmission time period.

The second STA receives the first radio frame sent by the first STA, performs channel detection within a preset time interval, and sends a second radio frame on a subset of a set of channels which are detected to be idle.

Optionally, the method may further include the following actions. After the second radio frame is completely sent, the second STA performs radio frame transmission at a fixed or predefined inter-frame space within a second transmission time period by using a bandwidth not larger than that used for the second radio frame.

Optionally, an ending time of the second transmission time period may be not later than an ending time of the first transmission time period.

Optionally, the second transmission time period may be determined according to an AC of a data radio frame within the second transmission time period.

Optionally, the second STA may perform exchange of control frames with the first STA between the second radio frame and the first radio frame.

Optionally, the method may further include the following actions.

When a destination receiving party of the first radio frame is not the second STA and no ACK frame is required, the second STA performs channel detection within a preset time interval after the first radio frame is received, and sends the second radio frame on the subset of the set of channels detected to be idle.

Optionally, the method may further include the following actions.

When the destination receiving party of the first radio frame is not the second STA and an ACK frame is required, the second STA performs channel detection within a preset time interval after the ACK frame is received, and sends the second radio frame on the subset of the set of channels detected to be idle.

Optionally, the method may further include the following actions.

When the destination receiving party of the first radio frame is the second STA and an ACK frame is required, the second STA performs channel detection within a preset time interval before the ACK frame is sent, transmits the ACK frame on a subset of a set of channels detected to be idle, and sends the second radio frame on the subset of the set of the idle channels after a preset time interval following the ACK frame.

Optionally, the method may further include the following actions.

When the destination receiving party of the first radio frame is the second STA and an ACK frame is required, the second STA performs channel idleness detection within a preset time interval after the ACK frame is sent, and sends the second radio frame on a subset of a set of channels detected to be idle.

Optionally, the method may further include the following actions.

When the destination receiving party of the first radio frame is the second STA and no ACK frame is required, the second STA performs channel idleness detection within a preset time interval after the first radio frame is received, and sends the second radio frame on the subset of the set of channels detected to be idle.

Embodiments of the disclosure further provide a channel access method, which may include the following actions.

A first STA sends a first radio frame to a second STA within a first transmission time period. Signaling carried in the first radio frame is arranged to notify the second STA that the first STA releases the first transmission time period.

Optionally, the first transmission time period may be a TXOP acquired by the first STA through contending for channel access, or the first transmission time period may be a transmission time period pre-allocated to the first STA.

The embodiments of the disclosure further provide a computer-readable storage medium, which may store a computer-executable instruction, the computer-executable instruction being executed to implement the abovementioned channel access methods.

The embodiments of the disclosure further provide a first STA, which may include a first radio frame obtaining module and a first radio frame sending module.

The first radio frame obtaining module is arranged to obtain a first radio frame to be sent to a second STA.

The first radio frame sending module is arranged to send the first radio frame to the second STA within a first transmission time period. Signaling carried in the first radio frame is arranged to notify the second STA that the first STA releases the first transmission time period.

Optionally, the first transmission time period may be a TXOP acquired by the first STA through contending for channel access, or the first transmission time period may be a transmission time period pre-allocated to the first STA.

The embodiments of the disclosure further provide a second STA, which may include a first radio frame receiving module and a second radio frame sending module.

The first radio frame receiving module is arranged to receive a first radio frame sent within a first transmission time period from a first STA. Signaling carried in the first radio frame is arranged to notify the second STA that the first STA releases the first transmission time period; and

The second radio frame sending module is arranged to receive the first radio frame sent by the first STA, perform channel detection within a preset time interval, and send a second radio frame on a subset of a set of channels which are detected to be idle.

Optionally, the second STA may further include a radio frame transmission module.

The radio frame transmission module is arranged to, after the second radio frame is completely sent, perform radio frame transmission at a fixed or predefined inter-frame space within a second transmission time period by using a bandwidth not larger than that used for the second radio frame.

Optionally, an ending time of the second transmission time period may be not later than an ending time of the first transmission time period.

Optionally, the second transmission time period may be determined according to an AC of a data radio frame within the second transmission time period.

Optionally, the second radio frame sending module may further be arranged to perform exchange of control frames with the first STA between the second radio frame and the first radio frame.

Optionally, the second radio frame sending module may further be arranged to, when a destination receiving party of the first radio frame is not the second STA and no ACK frame is required, perform channel detection within a preset time interval after the first radio frame is received, and send the second radio frame on the subset of the set of channels detected to be idle.

Optionally, the second radio frame sending module may further be arranged to, when the destination receiving party of the first radio frame is not the second STA and an ACK frame is required, perform channel detection within a preset time interval after the ACK frame is received, and send the second radio frame on the subset of the set of channels detected to be idle.

Optionally, the second radio frame sending module may further be arranged to, when the destination receiving party of the first radio frame is the second STA and an ACK frame is required, perform channel detection within a preset time interval before the ACK frame is sent, transmit the ACK frame on the subset of the set of channels detected to be idle, and send the second radio frame on the subset of the set of the idle channels after a preset time interval following the ACK frame.

Optionally, the second radio frame sending module may further be arranged to, when the destination receiving party of the first radio frame is the second STA and an ACK frame is required, perform channel idleness detection within a preset time interval after the ACK frame is sent, and send the second radio frame on the subset of the set of channels detected to be idle.

Optionally, the second radio frame sending module may further be arranged to, when the destination receiving party of the first radio frame is the second STA and no ACK frame is required, perform channel idleness detection within a preset time interval after the first radio frame is received, and send the second radio frame on the subset of the set of channels detected to be idle.

The embodiments of the disclosure further provide a channel access system, which may include a first STA and a second STA.

The first STA is arranged to send a first radio frame to a second STA within a first transmission time period. Signaling carried in the first radio frame is arranged to notify the second STA that the first STA releases the first transmission time period.

The second STA is arranged to receive the first radio frame sent by the first STA, perform channel detection within a preset time period, and send a second radio frame on a subset of a set of channels which are detected to be idle.

Optionally, the second STA may further be arranged to, after the second radio frame is completely sent, perform radio frame transmission at a fixed or predefined inter-frame space within a second transmission time period by using a bandwidth not larger than that used for the second radio frame.

According to the channel access method, STA and system provided by the embodiments of the disclosure, upon reception of the first radio frame sent within the first transmission time period from the first STA, the second STA performs channel detection within the preset time interval, sends the second radio frame on the subset of the set of the channels of which are detected to be idle, and then performs radio frame transmission at the fixed or predefined inter-frame space within the second transmission time period by using the bandwidth not larger than that used for the second radio frame. In such a manner, after any first STA obtains the first transmission time period, the second STA may acquire the second transmission time period on a detected idle channel after the first STA releases the first transmission time period, so that a channel contention capability of the second STA is greatly improved, and a channel access rate of the second STA is further increased.

After the drawings and detailed descriptions are read and understood, the other aspects may be comprehended.

### BRIEF DESCRIPTION OF DRAWINGS

FIG. 1 is a flowchart of a channel access method according to a first embodiment of the present disclosure.
FIG. 2 is a basic topological diagram of a BSS according to an embodiment of the disclosure.
FIG. 3 is a schematic diagram of a channel access method according to a fourth embodiment of the disclosure.
FIG. 4 is a schematic diagram of a channel access method according to a fifth embodiment of the disclosure.
FIG. 5 is a schematic diagram of a channel access method according to a sixth embodiment of the disclosure.
FIG. 6 is a schematic diagram of a channel access method according to a seventh embodiment of the disclosure.
FIG. 7 is a schematic diagram of a channel access method according to an eighth embodiment of the disclosure.
FIG. 8 is a schematic diagram of a channel access method according to a ninth embodiment of the disclosure.
FIG. 9 is a schematic diagram of a channel access method according to a tenth embodiment 10 of the disclosure.
FIG. 10 is a schematic diagram of a channel access method according to an eleventh embodiment of the disclosure.
FIG. 11 is a schematic diagram of a channel access method according to a twelfth embodiment of the disclosure.
FIG. 12 is a schematic diagram of a channel access method according to a fourteenth embodiment of the disclosure.
FIG. 13 is a structure diagram of a channel access system according to a fifteenth embodiment of the disclosure.

### DETAILED DESCRIPTION

Embodiments of the present disclosure will be described below in combination with the drawings. It is important to note that the embodiments in the disclosure and characteristics in the embodiments may be combined without conflicts.

### First Embodiment

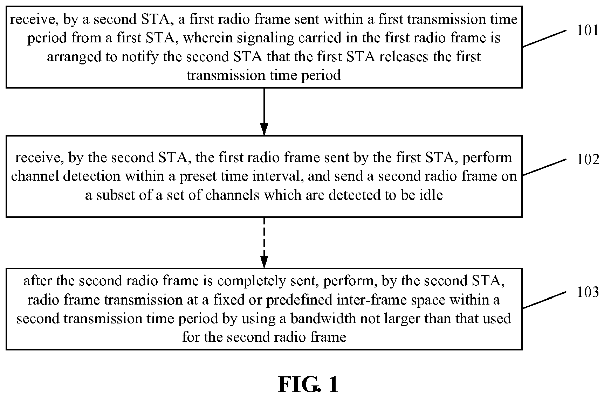

The first embodiment 1 of the disclosure provides a channel access method. As shown in FIG. 1, the method includes the following actions.

In Step 101, a second STA receives a first radio frame sent within a first transmission time period from a first STA. Signaling carried in the first radio frame is arranged to notify the second STA that the first STA releases the first transmission time period.

In Step 102, the second STA receives the first radio frame sent by the first STA, performs channel detection within a preset time interval, and sends a second radio frame on a subset of a set of channels which are detected to be idle.

According to an embodiment, the method may further include Step 103. After the second radio frame is completely sent, the second STA performs radio frame transmission at a fixed or predefined inter-frame space within a second transmission time period by using a bandwidth not larger than that used for the second radio frame.

It is important to note that a destination receiving party of the first radio frame sent by the first STA may be or may not be the second STA. When the destination receiving party of the first radio frame is the second STA, the second STA may parse the first radio frame to obtain the signaling carried in the first radio frame upon reception of the first radio frame. When the destination receiving party of the first radio frame is not the second STA, the second STA may parse a physical frame header of the first radio frame to obtain the signaling carried therein and arranged to notify the second STA that the first STA releases the first transmission time period after receiving the first radio frame, and it is parsed that the signaling is arranged to notify the second STA.

An ending time of the second transmission time period may be not later than an ending time of the first transmission time period. Alternatively, the second transmission time period may be determined according to an AC of a data radio frame within the second transmission time period.

The second STA may perform exchange of control frames with the first STA between the second radio frame and the first radio frame. For example, when the first radio frame requires an ACK frame, the second STA may return the ACK frame after the first radio frame is received and before the second STA sends the second radio frame.

According to an embodiment, when the destination receiving party of the first radio frame is not the second STA and no ACK frame is required, the second STA may perform channel detection within a preset time interval after the first radio frame is received, and send the second radio frame on a subset of a set of channels which are detected to be idle.

According to an embodiment, when the destination receiving party of the first radio frame is not the second STA and an ACK frame is required, the second STA may perform channel detection within a preset time interval after the ACK frame is received, and send the second radio frame on a subset of a set of channels detected to be idle.

According to an embodiment, when the destination receiving party of the first radio frame is the second STA and an ACK frame is required, the second STA may perform channel detection within a preset time interval before the ACK frame is sent, transmit the ACK frame on a subset of a set of channels which are detected to be idle, and send the second radio frame on the subset of the set of the idle channels after a preset time interval following the ACK frame.

According to an embodiment, when the destination receiving party of the first radio frame is the second STA and an ACK frame is required, the second STA may perform channel idleness detection within a preset time interval following the ACK frame is sent, and send the second radio frame on a subset of a set of channels which are detected to be idle.

According to an embodiment, when the destination receiving party of the first radio frame is the second STA and no ACK frame is required, the second STA may perform channel idleness detection within a preset time interval after the first radio frame is received, and send the second radio frame on a subset of a set of channels which are detected to be idle.

It is important to note that the ending time of the second transmission time period obtained by the second STA may later than the ending time of the first transmission time period. A time upper limit value of the second transmission time period may be set by the second STA according to a TXOP time upper limit value corresponding to an AC of data to be sent. Specifically, the second STA may set the TXOP time upper limit value corresponding to the AC of the data to be sent by the second STA, to be the time upper limit value of the second transmission time period, or, may also set a left duration of the first transmission time period to be the time upper limit value of the second transmission time period. Here, the left duration of the first transmission time period may refer to a time between completion of data sending by the first STA within the first transmission time period and the end time of the first transmission time period.

Here, a starting time point of the second transmission time period obtained by the second STA may be earlier than the end of the first transmission time period. Specifically, the starting time point may be a time point when the first STA completes data transmission within the first transmission time period. Before the set time upper limit value of the second transmission time period is reached, the second STA may send buffered data to a corresponding STA. That is, the second STA may send data buffered in the second STA to any one or more other STAs within a set time range of the second transmission period time. Here, the one or more STAs may include or may not include the first STA.

It can be seen that such a manner may greatly reduce channel contention overhead of the second STA. This is because any first STA, after obtaining a first TXOP, may notify the second STA to obtain a second TXOP. Therefore, a channel access ratio of the second STA may be greatly increased. The first STA, after obtaining the first transmission time period, may notify the second STA to obtain the second transmission time period. The second STA, after obtaining the second transmission time period, may start occupying a channel to execute data communication within the second transmission time period from an ending time of data transmission of the first STA within the first transmission time period. A time length of the second transmission time period may be determined by the second STA according to a transmission time upper limit corresponding to a certain AC. Therefore, the ending time of the second transmission time period is not limited, and may be the same as the ending time of the first transmission time period, or, may also be before or after the ending time of the first transmission time period.

It is important to note that the first STA may transmit data and may also transmit no data within the first transmission time period. The condition of transmitting no data is equivalent to that the first STA only contends for a transmission time period for the second STA by using own capability in an EDCA-based contention channel access process, or directly forwards the transmission time period pre-allocated to itself to the second STA which requires perform data sending. The condition of transmitting the data is equivalent to that the first STA simultaneously contends for data transmission time periods for itself and the other second STA respectively by using own capability, or shares a transmission time period obtained by the first STA with the second STA. In such a manner, the second TXOP obtained by the second STA may be considered as an extension of the first transmission time period obtained by the first STA, and after the extension, the time length of the second transmission time period may be set according to a requirement.

### Second Embodiment

Corresponding to the first embodiment of the disclosure, the second embodiment of the disclosure provides a channel access method, which may be applied to a first STA. The method includes the following actions. The first STA sends a first radio frame to a second STA within a first transmission time period. Signaling carried in the first radio frame is arranged to notify the second STA that the first STA releases the first transmission time period.

Here, the first transmission time period may be a TXOP obtained by the first STA through contending for channel access based on an EDCA mechanism. Alternatively, the first transmission time period may be a transmission time period obtained in a non-contention manner. For example, when the first STA is a non-AP STA, the first transmission time period may be a transmission time period pre-allocated to the non-AP STA by an AP STA.

When the first transmission time period obtained by the first STA is the TXOP obtained by the first STA through contending for channel access based on the EDCA mechanism, the action of the first STA obtaining the first transmission time period may include the following actions. After it is detected that a medium is idle, the first STA delays for an AIFS at first, then delays for a random backoff time period, and performs frame switching once to successfully acquire the first transmission time period.

### Third Embodiment

Corresponding to the first embodiment of the disclosure, the third embodiment of the disclosure provides a channel access method, which may be applied to a second STA. The method includes the following actions.

The second STA receives a first radio frame sent within a first transmission time period from a first STA. Signaling carried in the first radio frame is arranged to notify the second STA that the first STA releases the first transmission time period. and

The second STA receives the first radio frame sent by the first STA, performs channel detection within a preset time interval, and sends a second radio frame on a subset of a set of channels which are detected to be idle.

According to an embodiment, the method may further include the following actions. After the second radio frame is completely sent, the second STA performs radio frame transmission at a fixed or predefined inter-frame space within a second transmission time period by using a bandwidth not larger than that used for the second radio frame.

An ending time of the second transmission time period may be not later than an ending time of the first transmission time period. Alternatively, the second transmission time period may be determined according to an AC of a data radio frame within the second transmission time period.

The second STA may further perform exchange of control frames with the first STA between the second radio frame and the first radio frame.

According to an embodiment, when a destination receiving party of the first radio frame is not the second STA and no ACK frame is required, the second STA may perform channel detection within a preset time interval after the first radio frame is received, and send the second radio frame on a subset of a set of channels which are detected to be idle.

According to an embodiment, when the destination receiving party of the first radio frame is not the second STA and an ACK frame is required, the second STA may perform channel detection within a preset time interval after the ACK frame is received, and send the second radio frame on a subset of a set of channels which are detected to be idle.

According to an embodiment, when the destination receiving party of the first radio frame is the second STA and an ACK frame is required, the second STA may perform channel detection within a preset time interval before the ACK frame is sent, transmit the ACK frame on a subset of a set of channels which are detected to be idle, and send the second radio frame on the subset of the set of the idle channels after a preset time interval following the ACK frame.

According to an embodiment, when the destination receiving party of the first radio frame is the second STA and an ACK frame is required, the second STA may perform channel idleness detection within a preset time interval after the ACK frame is sent, and send the second radio frame on a subset of a set of channels which are detected to be idle.

According to an embodiment, when the destination receiving party of the first radio frame is the second STA and no ACK frame is required, the second STA may perform channel idleness detection within a preset time interval after the first radio frame is received, and send the second radio frame on a subset of a set of channels which are detected to be idle.

The channel access method of the embodiment of the disclosure will be further elaborated below in combination with topological structures in specific scenarios.

### Fourth Embodiment

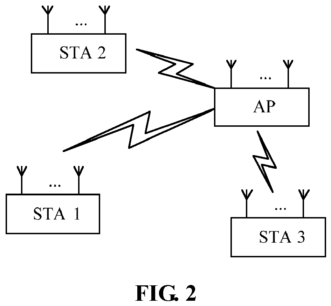

There is a BSS in a wireless communication system in a dense scenario, wherein an AP and STAs STA1, STA2 and STA3 are involved. A topological structure diagram of the BSS is shown in FIG. 2.

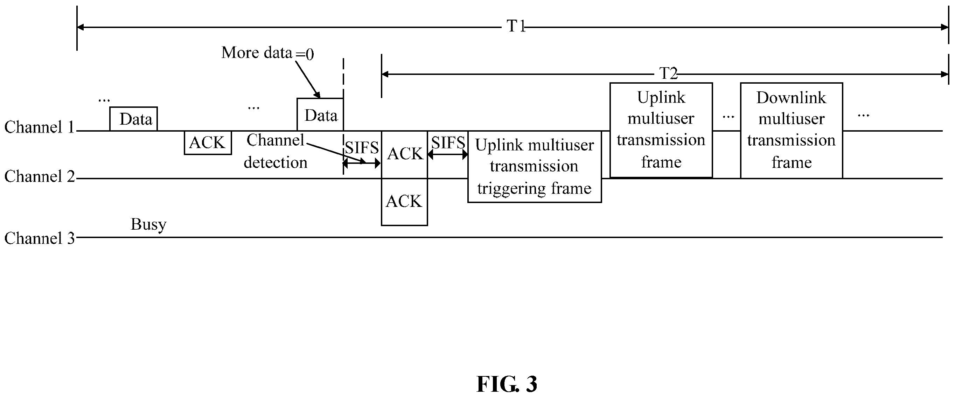

As shown in FIG. 3, STA1 contends for channel access on a channel 1 based on an EDCA mechanism. Specifically, after it is detected that the medium is idle on the channel 1, STA1 may delay for an AIFS, then delay for a random backoff time period, send a Request To Send (RTS) to the AP. After successfully receiving a Clear To Send (CTS) returned by the AP, the STA1 successfully acquire a first transmission time period T1, and then STA1 may start sending data.

STA1 may send a data frame to the AP on the channel 1. A more data domain of the data frame may be set to be 0 to indicate the AP that STA1 releases the first transmission time period by itself. An ACK policy domain of the data frame may be set to be ordinary ACK. The AP may start performing channel detection upon reception of the data frame. If it is detected that both the channel 1 and a channel 2 are idle within a Short Inter-Frame Space (SIFS), the AP may return an ACK in a repeat format on the channel 1 and the channel 2. Duration information carried in the ACK may be equal to T2, T2=left duration of T1. The AP may transmit data frames to STA2 and STA3 within T2 by using the channel 1 and the channel 2.

### Fifth Embodiment

There is a BSS in a wireless communication system in a dense scenario, in which an AP and STAs STA1, STA2 and STA3 are involved. A topological structure diagram of the BSS is shown in FIG. 2.

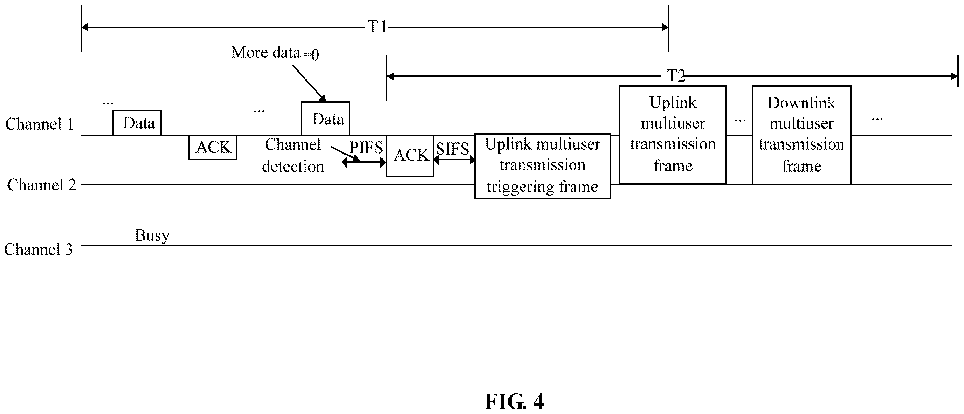

As shown in FIG. 4, STA1 contends for channel access on a channel 1 through an EDCA mechanism. Specifically, after it is detected that the medium is idle on the channel 1, STA1 may delay for an AIFS, then delay for a random backoff time period, and send an RTS to the AP. After successfully receiving a CTS returned by the AP , the STA1 successfully acquire a first transmission time period T1, and then STA1 may start sending data.

STA1 may send a data frame to the AP on the channel 1. A more data domain of the data frame may be set to be 0 to indicate the AP that STA1 releases the first transmission time period by itself. An ACK policy domain of the data frame may be set to be ordinary ACK. If the AP detects that both the channel 1 and a channel 2 are idle within a PCF Inter-Frame Space (PIFS) before an ACK is returned, the AP may return the ACK on the channel 1. Duration information carried in the ACK may be equal to T2, T2<left duration of T1. The AP may transmit data frames to STA2 and STA3 within T2 by using the channel 1 and the channel 2.

### Sixth Embodiment

There is a BSS in a wireless communication system in a dense scenario, in which an AP and STAs STA1, STA2 and STA3 are involved. A topological structure diagram of the BSS is shown in FIG. 2.

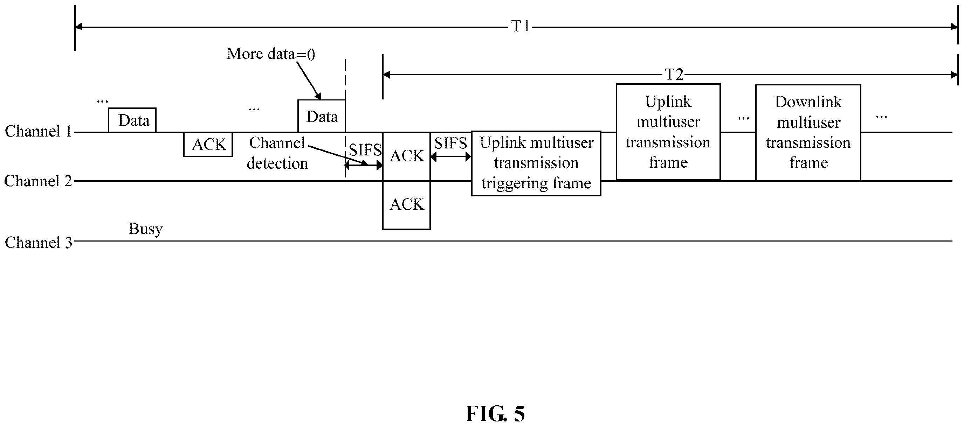

As shown in FIG. 5, STA1 contends for channel access on a channel 1 through an EDCA mechanism. Specifically, after it is detected that the medium is idle on the channel 1, STA1 may delay for an AIFS, then delay for a random backoff time period, send an RTS to the AP. After successfully receiving a CTS returned by the AP, the STA1 successfully acquire a first transmission time period T1, and then STA1 may start sending data.

STA1 may send a data frame to the AP on the channel 1. An ACK policy domain of the data frame may be set to be ordinary ACK. The data frame may contain indication information to indicate the AP that STA1 releases the first transmission time period by itself. The AP may start performing channel detection upon reception of the data frame. If it is detected that both the channel 1 and a channel 2 are idle within an SIFS, the AP may return an ACK on the channel 1 and the channel 2. The AP sends a downlink data frame to STA2 on the channel 1 and the channel 2 after an SIFS after the ACK is returned. An AC of the data frame may be AC_VO. Duration information contained in the data frame may be equal to T2, and T2 is a TXOP upper limit value corresponding to AC_VO. The AP may transmit data frames to STA2 and STA3 within T2 by using the channel 1 and the channel 2.

### Seventh Embodiment

There is a BSS in a wireless communication system in a dense scenario, in which an AP and STAs STA1, STA2 and STA3 are involved. A topological structure diagram of the BSS is shown in FIG. 2.

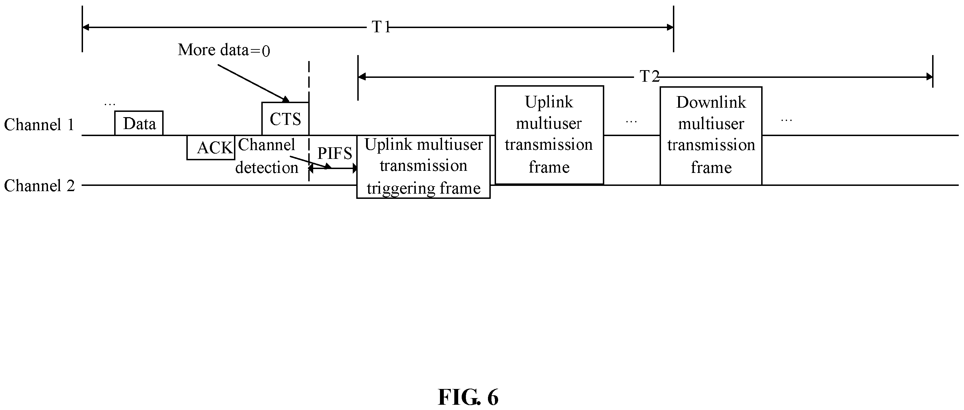

As shown in FIG. 6, STA1 contends for channel access on a channel 1 through an EDCA mechanism. Specifically, after it is detected that the medium is idle on the channel 1, STA1 may delay for an AIFS, then delay for a random backoff time period, and send an RTS to the AP. After successfully receiving a CTS returned by the AP, the STA1 successfully acquire a first transmission time period T1, and then STA1 may start sending data.

STA1 may send a data frame to the AP on the channel 1. An ACK policy domain of the data frame may be set to be ordinary ACK. STA1 may send a CTS control frame to the AP after receiving an ACK returned by the AP. A more data domain in the frame may be set to be 0 to indicate the AP that STA1 releases the first transmission time period by itself. The AP may start performing channel detection upon reception of the CTS. If it is detected that both the channel 1 and a channel 2 are idle within a PIFS, the AP may send a radio frame on the channel 1 and the channel 2. An AC of the radio frame may be AC_VI. A duration information domain of the radio frame may be set to be T2, T2 is a TXOP upper limit value corresponding to AC_VI. The radio frame may be arranged to trigger uplink multiuser transmission. STA2 and STA3 may send uplink multiuser data to the AP within T2 by using the channel 1 and the channel 2, and the AP performs downlink data transmission within T2 by using the channel 1 and the channel 2.

### Eighth Embodiment

There is a BSS in a wireless communication system in a dense scenario, in which an AP and STAs STA1, STA2 and STA3 are involved. A topological structure diagram of the BSS is shown in FIG. 2.

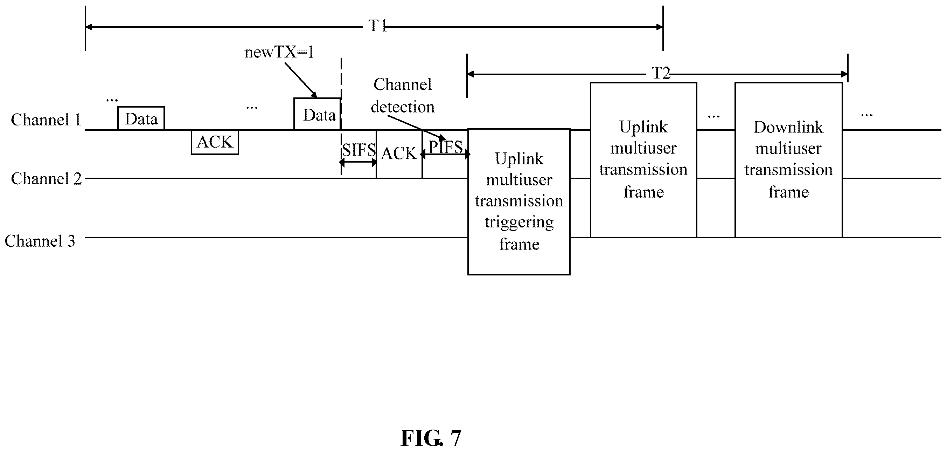

As shown in FIG. 7, STA1 contends for channel access on a channel 1 through an EDCA mechanism. Specifically, after it is detected that the medium is idle on the channel 1, STA1 may delay for an AIFS, then delay for a random backoff time period, and send an RTS to the AP. After successfully receiving a CTS returned by the AP, the STA1 successfully acquires a first transmission time period T1, and then STA1 may start sending data.

STA1 may send a data frame to the AP on the channel 1. An ACK policy domain of the data frame may be set to be ordinary ACK. The data frame may contain indication information (for example, a new TX domain is set to be 1) to indicate the AP that STA1 releases the first transmission time period by itself. Upon reception of the data frame, the AP may return an ACK and start performing channel detection. If it is detected that the channel 1, a channel 2 and a channel 3 are all idle within a PIFS, the AP may send a radio frame on the channel 1, the channel 2 and the channel 3. An AC of the radio frame may be AC_VI. A duration information domain of the radio frame may be set to be T2, T2 is a TXOP upper limit value corresponding to AC_VI. The radio frame may be arranged to trigger uplink multiuser transmission and indicate STA1, STA2 and STA3 to send uplink multiuser data to the AP within T2 by using the channel 1, the channel 2 and the channel 3. The AP may perform downlink data transmission within T2 by using the channel 1, the channel 2 and the channel 3.

### Ninth Embodiment

There is a BSS in a wireless communication system in a dense scenario, in which an AP and STAs STA1, STA2 and STA3 are involved. A topological structure diagram of the BSS is shown in FIG. 2.

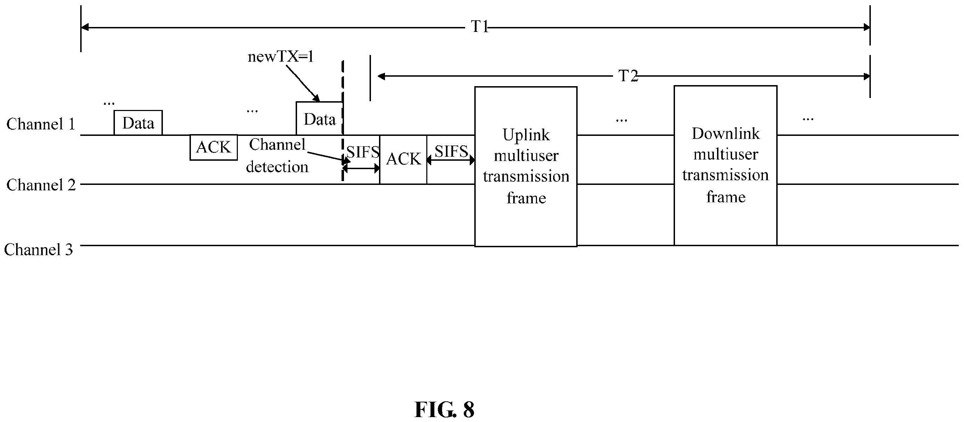

As shown in FIG. 8, STA1 contends for channel access on a channel 1 through an EDCA mechanism. Specifically, after it is detected that the medium is idle on the channel 1, STA1 may delay for an AIFS, then delay for a random backoff time period, send an RTS to the AP. After successfully receiving a CTS returned by the AP, the STA1 successfully acquires a first transmission time period T1, and then STA1 may start sending data.

STA1 may send a data frame to the AP on the channel 1. An ACK policy domain of the data frame may be set to be ordinary ACK. A new TX domain of the data frame may be set to be 1 to indicate the AP that STA1 releases the first transmission time period by itself. The AP may perform channel detection within an SIFS before an ACK is returned. If it is detected that the channel 1, a channel 2 and a channel 3 are all idle, the AP may return the ACK. A physical frame header in the ACK may contain uplink multiuser transmission triggering information. The triggering information indicates STA1, STA2 and STA3 to perform uplink multiuser transmission. Duration information contained in the ACK may be set to be T2, T2=left duration of T1. After the SIFS, STA1, STA2 and STA3 may send uplink multiuser transmission frames on the channel 1, the channel 2 and the channel 3, and the AP may perform downlink data transmission within T2 by using the channel 1, the channel 2 and the channel 3.

### Tenth Embodiment

There is a BSS in a wireless communication system in a dense scenario, in which an AP and STAs STA1, STA2 and STA3 are involved. A topological structure diagram of the BSS is shown in FIG. 2.

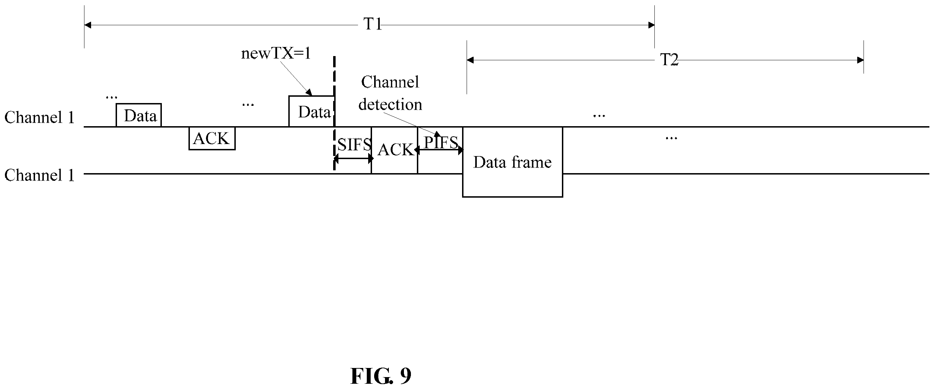

As shown in FIG. 9, STA1 contends for channel access on a channel 1 through an EDCA mechanism. Specifically, after it is detected that the medium is idle on the channel 1, STA1 may delay for an AIFS, then delay for a random backoff time period, and send an RTS to the AP. After successfully receiving a CTS returned by the AP, the STA1 successfully acquires a first transmission time period T1, and then STA1 may start sending data.

STA1 may send a data frame to the AP on the channel 1. An ACK policy domain of the data frame may be set to be ordinary ACK. The data frame may contain indication information (for example, a new TX domain is set to be 1) to indicate the AP that STA1 releases the first transmission time period by itself. The AP may return an ACK and start performing channel detection. If it is detected that both the channel 1 and a channel 2 are idle within a PIFS, the AP may send a data frame on the channel 1 and the channel 2. Duration information contained in the data frame may be set to be T2, T2 is equal to a TXOP upper limit value corresponding to an AC of the data frame. Meanwhile, a new transmission time period T2 may be started, and the AP may transmit data to STA1, STA2 and STA3 within T2 by using the channel 1 and the channel 2.

### Eleventh Embodiment

There is a BSS in a wireless communication system in a dense scenario, in which an AP and STAs STA1, STA2 and STA3 are involved. A topological structure diagram of the BSS is shown in FIG. 2.

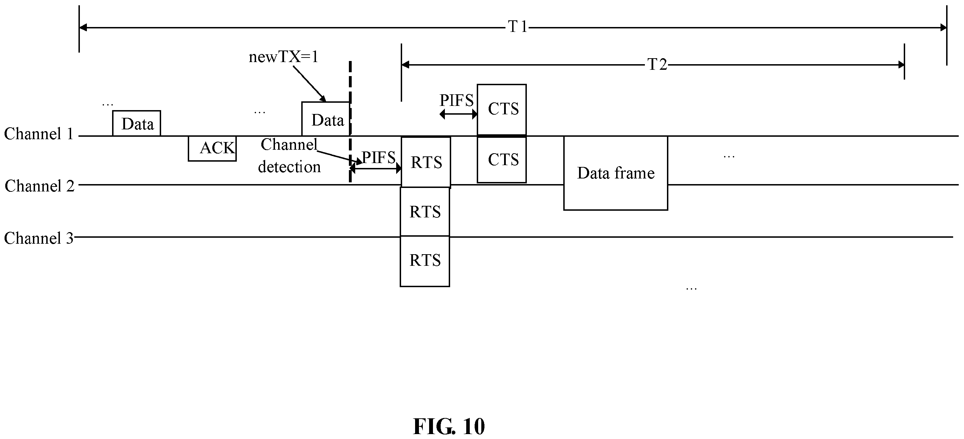

As shown in FIG. 10, STA1 contends for channel access on a channel 1 through an EDCA mechanism. Specifically, after it is detected that the medium is idle on the channel 1, STA1 may delay for an AIFS, then delay for a random backoff time period, and send an RTS to the AP. After successfully receiving a CTS returned by the AP, the STA1 successfully acquires a first transmission time period T1, and then STA1 may start sending data.

STA1 may send a data frame to the AP on the channel 1. An ACK policy domain of the data frame may be set to be no ACK. The data frame may contain indication information (for example, a new TX domain is set to be 1) to indicate the AP that STA1 releases the first transmission time period by itself. The AP may start performing channel detection upon reception of the data frame. If it is detected that the channel 1, a channel 2 and a channel 3 are all idle within a PIFS, the AP may send an RTS arranged for bandwidth negotiation in a repeat format on the channel 1, the channel 2 and the channel 3. Duration information contained in the RTS may be set to be T2, T2<left duration of T1. If STA3 detects that both the channel 1 and the channel 2 are idle within a PIFS before a CTS is returned, STA3 may return the CTS in the repeat format on the channel 1 and the channel 2, and the AP may send data to STA3 on the channel 1 and the channel 2 upon reception of the CTS.

### Twelfth Embodiment

There is a BSS in a wireless communication system in a dense scenario, in which an AP and STAs STA1, STA2 and STA3 are involved. A topological structure diagram of the BSS is shown in FIG. 2.

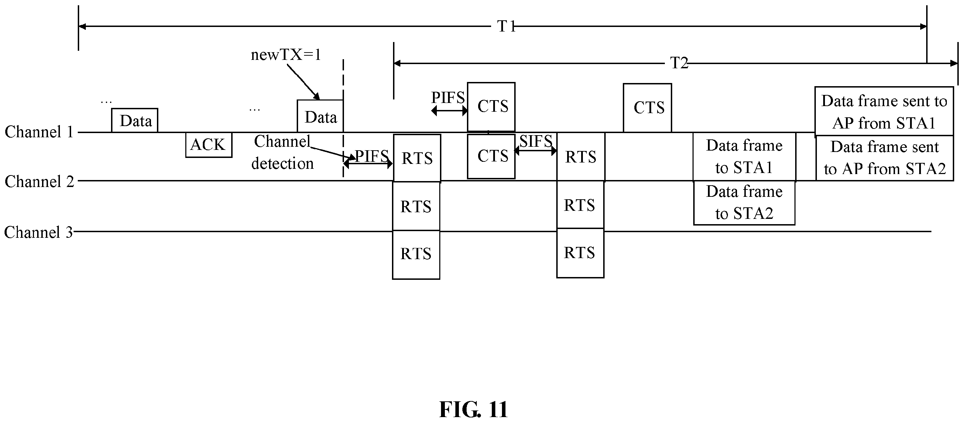

As shown in FIG. 11, STA1 contends for channel access on a channel 1 through an EDCA mechanism. Specifically, after it is detected that the medium is idle on the channel 1, STA1 may delay for an AIFS, then delay for a random backoff time period, and send an RTS to the AP. After successfully receiving a CTS returned by the AP, the STA1 successfully acquire a first transmission time period T1, and then STA1 may start sending data.

STA1 may send a data frame to the AP on the channel 1 An ACK policy domain of the data frame may be set to be no ACK. The data frame may contain indication information (for example, a new TX domain is set to be 1) to indicate the AP that STA1 releases the first transmission time period by itself. The AP may start performing channel detection upon reception of the data frame. If it is detected that the channel 1, a channel 2 and a channel 3 are all idle within a PIFS, the AP may send an RTS arranged for bandwidth negotiation to STA1 in a repeat format on the channel 1, the channel 2 and the channel 3. The STA1 may perform channel detection within a PIFS before a CTS is returned and return the CTS on the channel available for the STA1. After the PIFS, the AP may send an RTS arranged for bandwidth negotiation to STA2 in the repeat format. The STA2 may perform channel detection within a PIFS before a CTS is returned and return the CTS on the channel available for the STA2. The AP may send a downlink multiuser transmission frame to STA1 and STA2 on the channel 1, the channel 2 and the channel 3 according to CTS information returned by STA1 and STA2. A duration information domain of the frame may be set to be a TXOP upper limit value corresponding to an AC of sent data, uplink channel resources are allocated, and STA1 and STA2 may send uplink multiuser data to the AP on the allocated channel resources.

### Thirteenth Embodiment

There is a BSS in a wireless communication system in a dense scenario, wherein an AP and STAs STA1, STA2 and STA3 are included. A topological structure diagram of the BSS is shown in FIG. 2.

STA1 contends for channel access on a channel 1 through an EDCA mechanism. Specifically, after it is detected that the medium is idle on the channel 1, STA1 may delay for an AIFS, then delay for a random backoff time period, and send an RTS to the AP. After successfully receiving a CTS returned by the AP, the STA1 successfully acquires a first transmission time period T1, and then STA1 may start sending data.

STA1 may send a radio frame to the AP on the channel 1. Meanwhile, a physical frame header of the radio frame may contain indication information arranged to indicate STA2 that STA1 releases the first transmission time period by STA1. STA2 may start performing channel detection upon reception of the radio frame and decoding the indication information in the physical frame header. If it is detected that the channel 1, a channel 2 and a channel 3 are all idle within a PIFS, STA2 may send an uplink data frame to the AP on the channel 1, the channel 2 and the channel 3.

### Fourteenth Embodiment

There is a BSS in a wireless communication system in a dense scenario, in which an AP and STAs STA1, STA2 and STA3 are involved. A topological structure diagram of the BSS is shown in FIG. 2.

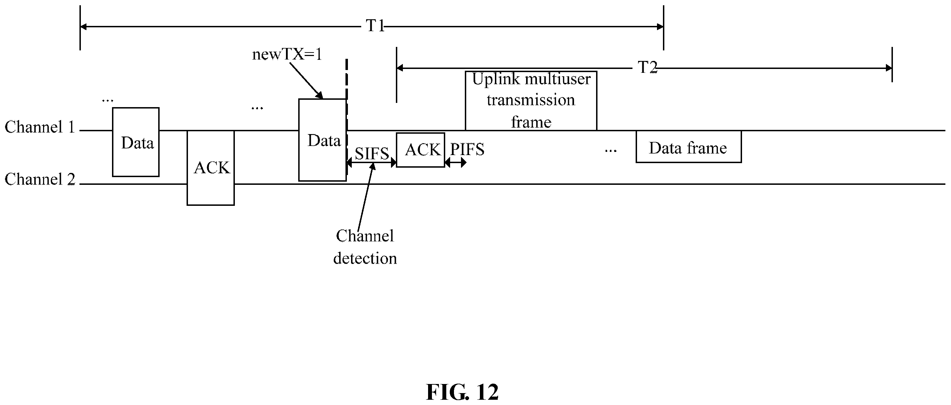

As shown in FIG. 12, STA1 contends for channel access on a channel 1 and a channel 2 through an EDCA mechanism. Specifically, after it is detected that the media are idle on the channel 1 and the channel 2, STA1 may delay for an AIFS, then delay for a random backoff time period, and send an RTS to the AP. After successfully receiving a CTS returned by the AP, the STA1 successfully acquires a first transmission time period T1, and then STA1 may start sending data.

STA1 may send a data frame to the AP on the channel 1 and the channel 2. A new TX domain of the data frame may be set to be 1 to indicate that STA1 releases the first transmission time period by the STA1. An ACK policy domain of the data frame may be set to be ordinary ACK. The AP may start performing channel detection upon reception of the data frame. If it is detected that the channel 1 is idle within an SIFS, the AP may return an ACK containing uplink multiuser transmission triggering information (including channel resource allocation information of STA2 and STA3) on the channel. Duration information contained in the ACK may be equal to T2, T2>left duration of T1. After a PIFS, STA2 and STA3 may send uplink multiuser transmission information on the channel 1, and then the AP may perform downlink data transmission within T2 by using the channel 1.

### Fifth Embodiment

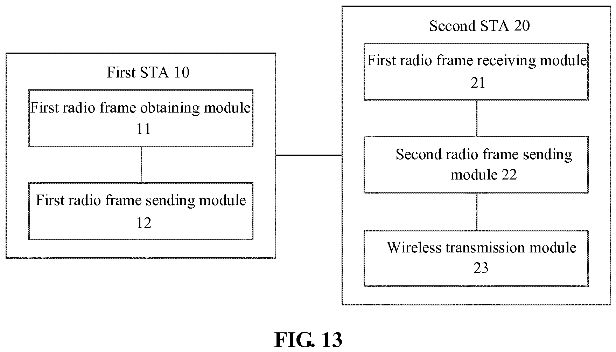

Corresponding to the channel access method of the embodiment of the disclosure, the embodiment of the disclosure further provides a channel access system. As shown in FIG. 13, the system includes a first STA 10 and a second STA 20.

The first STA 10 is arranged to send a first radio frame to a second STA within a first transmission time period. Signaling carried in the first radio frame is arranged to notify the second STA that the first STA releases the first transmission time period.

The second STA 20 is arranged to receive the first radio frame sent by the first STA, perform channel detection within a preset time period, and send a second radio frame on a subset of a set of channels which are detected to be idle.

According to an embodiment, the second STA 20 may further be arranged to, after the second radio frame is completely sent, perform radio frame transmission at a fixed or predefined inter-frame space within a second transmission time period by using a bandwidth not larger than that used for the second radio frame.

The first STA 10 may include a first radio frame obtaining module 11 and a first radio frame sending module 12.

The first radio frame obtaining module 11 is arranged to obtain the first radio frame to be sent to the second STA.

The first radio frame sending module 12 is arranged to send the first radio frame to the second STA within the first transmission time period. Signaling carried in the first radio frame is arranged to notify the second STA that the first STA releases the first transmission time period.

Here, the first transmission time period may be a TXOP acquired by the first STA through contending for channel access, or the first transmission time period may be a transmission time period pre-allocated to the first STA.

The second STA 20 may include a first radio frame receiving module 21 and a second radio frame sending module 22.

The first radio frame receiving module 21 is arranged to receive the first radio frame sent within the first transmission time period from the first STA. Signaling carried in the first radio frame is arranged to notify the second STA that the first STA releases the first transmission time period.

The second radio frame sending module 22 is arranged to receive the first radio frame sent by the first STA, perform channel detection within the preset time interval, and send the second radio frame on the subset of the set of the channels which are detected to be idle.

The radio frame transmission module 23 is arranged to, after the second radio frame is completely sent, perform radio frame transmission at the fixed or predefined inter-frame space within the second transmission time period by using the bandwidth not larger than that used for the second radio frame.

An ending time of the second transmission time period may be not later than an ending time of the first transmission time period, or, the second transmission time period may be determined according to an AC of a data radio frame within the second transmission time period.

Optionally, the second radio frame sending module 22 may further be arranged to perform exchange of control frames with the first STA between the second radio frame and the first radio frame.

According to an embodiment, the second radio frame sending module 22 may further be arranged to, when a destination receiving party of the first radio frame is not the second STA and no ACK frame is required, perform channel detection within a preset time interval after the first radio frame is received, and send the second radio frame on a subset of a set of channels which are detected to be idle.

According to an embodiment, the second radio frame sending module 22 may further be arranged to, when the destination receiving party of the first radio frame is not the second STA and an ACK frame is required, perform channel detection within a preset time interval after the ACK frame is received, and send the second radio frame on a subset of a set of channels which are detected to be idle.

According to an embodiment, the second radio frame sending module 22 may further be arranged to, when the destination receiving party of the first radio frame is the second STA and an ACK frame is required, perform channel detection within a preset time interval before the ACK frame is sent, return the ACK frame on a subset of a set of channels which are detected to be idle, and send the second radio frame on the subset of the set of the idle channels after a preset time interval following the ACK frame.

According to an embodiment, the second radio frame sending module 22 may further be arranged to, when the destination receiving party of the first radio frame is the second STA and an ACK frame is required, perform channel idleness detection within a preset time interval after the ACK frame is sent, and send the second radio frame on a subset of a set of channels which are detected to be idle.

According to an embodiment, the second radio frame sending module 22 may further be arranged to, when the destination receiving party of the first radio frame is the second STA and no ACK frame is required, perform channel idleness detection within a preset time interval after the first radio frame is received, and send the second radio frame on a subset of a set of channels which are detected to be idle.

From the above, in the embodiments of the disclosure, upon reception of the first radio frame sent by the first STA within the first transmission time period, the second STA performs channel detection within the preset time interval, sends the second radio frame on the subset of the set of the channels of which are detected to be idle, and then performs radio frame transmission at the fixed or predefined inter-frame space within the second transmission time period by using the bandwidth not larger than that used for the second radio frame. In such a manner, after any first STA obtains the first transmission time period, the second STA may acquire the second transmission time period on a detected idle channel after the first STA releases the first transmission time period, so that a channel contention capability of the second STA is greatly improved, and a channel access rate of the second STA is further increased.

An embodiment of the disclosure further provides a computer-readable storage medium, which stores a computer-executable instruction, the computer-executable instruction being executed to implement the abovementioned channel access method.

Those skilled in the art should know that the embodiment of the disclosure may be provided as a method, a system or a computer program product. Therefore, the disclosure may adopt a form of hardware embodiment, software embodiment or combined software and hardware embodiment. Moreover, the disclosure may adopt a form of computer program product implemented on one or more computer-available storage media (including, but not limited to, a disk memory and an optical memory) including computer-available program codes.

It can be understood that the disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

Those skilled in the art should comprehend that all or part of steps of the embodiment may be implemented by using a flow of a computer program, the computer program may be stored in a computer-readable storage medium, the computer program is executed on a corresponding hardware platform (for example, a system, equipment, a device, an apparatus and a processor), and during execution, one or combination of the steps of the method embodiment is included.

Optionally, all or part of steps of the embodiment may also be implemented by using an integrated circuit, these steps may form multiple integrated circuit modules respectively, or multiple modules or steps therein may form a single integrated circuit module for implementation.

The devices/function modules/function units in the embodiment may be implemented by adopting a universal computing device, and they may be concentrated on a single computing device, and may also be distributed on a network formed by multiple computing devices.

When being implemented in form of software function module and sold or used as an independent product, each device/function module/function unit in the embodiment may be stored in a computer-readable storage medium. The abovementioned computer-readable storage medium may be a read-only memory, a magnetic disk, an optical disk or the like.

Those skilled in the art should know that modifications or equivalent replacements may be made to the technical solutions of the disclosure without departing from the spirit and scope of the technical solutions of the disclosure. The scope of protection of the disclosure is subject to the scope defined by the claims.

### INDUSTRIAL APPLICABILITY

According to the channel access method, STA and system provided by the embodiments of the disclosure, upon reception of the first radio frame sent by the first STA within the first transmission time period, the second STA performs channel detection within the preset time interval, sends the second radio frame on the subset of the set of the channels of which are detected to be idle, and then performs radio frame transmission at the fixed or predefined inter-frame space within the second transmission time period by using the bandwidth not larger than that used for the second radio frame. In such a manner, after any first STA obtains the first transmission time period, the second STA may acquire the second transmission time period on a detected idle channel after the first STA releases the first transmission time period, so that a channel contention capability of the second STA is greatly improved, and a channel access rate of the second STA is further increased.

## Claims

1. A channel access method, comprising:
receiving, by a second Station (STA), a first radio frame sent within a first transmission time period from a first STA, wherein, signaling carried in the first radio frame is arranged to notify the second STA that the first STA releases the first transmission time period; and
upon reception of the first radio frame sent from the first STA, performing, by the second STA, channel detection within a preset time interval, and sending a second radio frame on a subset of a set of channels which are detected to be idle.

2. The channel access method according to claim 1, further comprising:
after the second radio frame is completely sent, performing, by the second STA, radio frame transmission at a fixed or predefined inter-frame space within a second transmission time period by using a bandwidth not larger than that used for the second radio frame.

3. The channel access method according to claim 2, wherein an ending time of the second transmission time period is not later than an ending time of the first transmission time period.

4. The channel access method according to claim 2, wherein the second transmission time period is determined according to an Access Category (AC) of a data radio frame within the second transmission time period.

5. The channel access method according to claim 1 or 2, wherein the second STA performs exchange of control frames with the first STA between the second radio frame and the first radio frame.

6. The channel access method according to claim 1 or 2, further comprising:
when a destination receiving party of the first radio frame is not the second STA and no Acknowledgement (ACK) frame is required, performing, by the second STA, channel detection within a preset time interval after the first radio frame is received, and sending the second radio frame on the subset of the set of channels which are detected to be idle.

7. The channel access method according to claim 1 or 2, further comprising:
when the destination receiving party of the first radio frame is not the second STA and an ACK frame is required, performing, by the second STA, channel detection within a preset time interval after the ACK frame is received, and sending the second radio frame on the subset of the set of channels which are detected to be idle.

8. The channel access method according to claim 1 or 2, further comprising:
when the destination receiving party of the first radio frame is the second STA and an ACK frame is required, performing, by the second STA, channel detection within a preset time interval before the ACK frame is sent, transmitting the ACK frame on the subset of the set of channels which are detected to be idle, and sending the second radio frame on the subset of the set of the idle channels after a preset time interval following the ACK frame.

9. The channel access method according to claim 1 or 2, further comprising:
when the destination receiving party of the first radio frame is the second STA and an ACK frame is required, performing, by the second STA, channel idleness detection within a preset time interval after the ACK frame is sent, and sending the second radio frame on the subset of the set of channels which are detected to be idle.

10. The channel access method according to claim 1 or 2, further comprising:
when the destination receiving party of the first radio frame is the second STA and no ACK frame is required, performing, by the second STA, channel idleness detection within a preset time interval after the first radio frame is received, and sending the second radio frame on the subset of the set of channels which are detected to be idle.

11. A channel access method, comprising:
sending, by a first Station (STA), a first radio frame to a second STA within a first transmission time period, wherein, signaling carried in the first radio frame is arranged to notify the second STA that the first STA releases the first transmission time period.

12. The channel access method according to claim 11, wherein the first transmission time period is a Transmission Opportunity (TXOP) acquired, by the first STA, through contending for channel access, or the first transmission time period is a transmission period pre-allocated to the first STA.

13. A first Station (STA), comprising:
a first radio frame obtaining module, arranged to obtain a first radio frame to be sent to a second STA; and
a first radio frame sending module, arranged to send the first radio frame to the second STA within a first transmission time period, wherein signaling carried in the first radio frame is arranged to notify the second STA that the first STA releases the first transmission time period.

14. The first STA according to claim 13, wherein the first transmission time period is a Transmission Opportunity (TXOP) acquired by the first STA through contending for channel access, or the first transmission time period is a transmission time period pre-allocated to the first STA.

15. A second Station (STA), comprising:
a first radio frame receiving module, arranged to receive a first radio frame sent within a first transmission time period from a first STA, wherein, signaling carried in the first radio frame is arranged to notify the second STA that the first STA releases the first transmission time period; and
a second radio frame sending module, arranged to, upon reception of the first radio frame sent by the first STA, perform channel detection within a preset time interval, and send a second radio frame on a subset of a set of channels which are detected to be idle.

16. The second STA according to claim 15, further comprising:
a radio frame transmission module, arranged to, after the second radio frame is completely sent, perform radio frame transmission at a fixed or predefined inter-frame space within a second transmission time period by using a bandwidth not larger than that used for the second radio frame.

17. The second STA according to claim 16, wherein an ending time of the second transmission time period is not later than an ending time of the first transmission time period.

18. The second STA according to claim 16, wherein the second transmission time period is determined according to an Access Category (AC) of a data radio frame within the second transmission time period.

19. The second STA according to claim 15 or 16, wherein the second radio frame sending module is further arranged to perform exchange of control frames with the first STA between the second radio frame and the first radio frame.

20. The second STA according to claim 15 or 16, wherein the second radio frame sending module is further arranged to, when a destination receiving party of the first radio frame is not the second STA and no Acknowledgement (ACK) frame is required, perform channel detection within a preset time interval after the first radio frame is received, and send the second radio frame on the subset of the set of channels which are detected to be idle.

21. The second STA according to claim 15 or 16, wherein the second radio frame sending module is further arranged to, when the destination receiving party of the first radio frame is not the second STA and an ACK frame is required, perform channel detection within a preset time interval after the ACK frame is received, and send the second radio frame on the subset of the set of channels detected to be idle.

22. The second STA according to claim 15 or 16, wherein the second radio frame sending module is further arranged to, when the destination receiving party of the first radio frame is the second STA and an ACK frame is required, perform channel detection within a preset time interval before the ACK frame is sent, return the ACK frame on the subset of the set of channels detected to be idle, and send the second radio frame on the subset of the set of the idle channels after a preset time interval following the ACK frame.

23. The second STA according to claim 15 or 16, wherein the second radio frame sending module is further arranged to, when the destination receiving party of the first radio frame is the second STA and an ACK frame is required, perform channel detection within a preset time interval after the ACK frame is sent, and send the second radio frame on the subset of the set of channels which are detected to be idle.

24. The second STA according to claim 15 or 16, wherein the second radio frame sending module is further arranged to, when the destination receiving party of the first radio frame is the second STA and no ACK frame is required, perform channel detection within a preset time interval after the first radio frame is received, and send the second radio frame on the subset of the set of channels which are detected to be idle.

25. A channel access system, comprising:
a first Station (STA), arranged to send a first radio frame to a second STA within a first transmission time period, wherein, signaling carried in the first radio frame is arranged to notify the second STA that the first STA releases the first transmission time period; and
the second STA, arranged to receive the first radio frame sent by the first STA, perform channel detection within a preset time period, and send a second radio frame on a subset of a set of channels which are detected to be idle.

26. The channel access system according to claim 25, wherein the second STA is further arranged to: after the second radio frame is completely sent, perform radio frame transmission at a fixed or predefined inter-frame space within a second transmission time period by using a bandwidth not larger than that used for the second radio frame.
